# EUROPÄISCHE PATENTSCHRIFT

(11) **EP 3 881 428 B1**
(45) Veröffentlichungstag und Bekanntmachung des Hinweises auf die Patenterteilung: **08.11.2023**
(21) Anmeldenummer: 19769457.3
(22) Anmeldetag: 13.09.2019
(51) Int. Cl.: H02P 29/024, H02P 3/00, H02H 7/08

(54) **BETREIBEN EINES BÜRSTENLOSEN GLEICHSTROMMOTORS**
OPERATING OF A BRUSHLESS DC MOTOR
FONCTIONNEMENT D'UN MOTEUR À COURANT CONTINU SANS BALAIS

(30) Priorität: 13.11.2018 DE 102018219331
(43) Veröffentlichungstag der Anmeldung: 22.09.2021
(73) Patentinhaber: Continental Automotive Technologies GmbH, 30165 Hannover (DE)
(72) Erfinder: LOERINCZ, Robert Istvan, 60488 Frankfurt am Main (DE); ARABACKYJ, Marc, 60488 Frankfurt am Main (DE); JERICHOW, Edgar, 60488 Frankfurt am Main (DE); KUHN, Mathias, 60488 Frankfurt am Main (DE); GÜRTLER, Thomas, 60488 Frankfurt am Main (DE); PSCHORR, Andreas, 60488 Frankfurt am Main (DE)
(74) Vertreter: Continental Corporation
(86) Internationale Anmeldenummer: PCT/EP2019/074596
(87) Internationale Veröffentlichungsnummer: WO 2020/098994

(56) Entgegenhaltungen:
- EP-A2- 2 793 129
- DE-A1-102013 220 979
- DE-A1-102013 220 995

## Beschreibung

Die Erfindung betrifft eine Motorsteuerungsvorrichtung und ein Verfahren zum Betreiben eines dreiphasigen bürstenlosen Gleichstrommotors.

Sicherheitsrelevante Systeme müssen im Falle einer gefährlichen Fehlfunktion in einen sicheren Betriebszustand versetzt werden. Beispielsweise spezifiziert die Norm ISO 26262 Sicherheitsanforderungsstufen ASIL (= automotive safety integrity level) für sicherheitsrelevante Systeme in Kraftfahrzeugen.

In einigen Anwendungen mit elektronisch gesteuerten bürstenlosen Gleichstrommotoren wird ein sicherer Systemzustand beispielsweise erreicht, indem der bürstenlose Gleichstrommotor aktiv in einen vorher festgelegten Betriebszustand, beispielsweise einen ausgekoppelten Zustand im Falle eines Getriebeaktuators, gefahren wird. Alternativ kann das System mit mechanischen Mitteln, beispielsweise durch Auskopplung mittels einer Feder, oder mit Mikrocontrollerunterstützung in einen sicheren Betriebszustand gefahren werden, wodurch jedoch die Wahrscheinlichkeit, Betriebszustände hoher Sicherheitsanforderungsstufen zu erreichen, im Falle von Fehlfunktionen des elektronischen Antriebssteuerungssystems teilweise erheblich reduziert wird.

DE 102013220995 A1 zeigt ein Verfahren zum Erkennen eines Drahtbruchfehlers beim Betrieb eines bürstenlosen Gleichstrommotors.

EP 2793129 A2 zeigt eine Überwachungsschaltung, die bestimmt, dass eine CPU einen Fehler hat, wenn der Zustand des von der CPU ausgegebenen gepulsten Signals nicht richtig ist, und gibt dann ein gepulstes Rücksetzsignal aus.

WO 2014/173792 A2 offenbart ein Verfahren zum Betreiben eines dreiphasigen bürstenlosen Gleichstrommotors mit einer durch Pulsweitenmodulation gesteuerten elektronischen Kommutierung im Fall einer Fehlfunktion. Nach Signalisierung der Fehlfunktion wird der Rotor des bürstenlosen Gleichstrommotors mit einer vorgegebenen Höchstanzahl von Kommutierungsschritten in einer vorgegebenen Motordrehrichtung gedreht und der bürstenlose Gleichstrommotor wird danach in einen ausgewählten Betriebsendzustand versetzt.

Der Erfindung liegt die Aufgabe zu Grunde, eine verbesserte Motorsteuerungsvorrichtung und ein verbessertes Verfahren zum sicheren Betreiben eines bürstenlosen Gleichstrommotors im Fall einer Fehlfunktion anzugeben.

Die Aufgabe wird erfindungsgemäß durch eine Motorsteuerungsvorrichtung mit den Merkmalen des Anspruchs 1 und ein Verfahren mit den Merkmalen des Anspruchs 5 gelöst.

Vorteilhafte Ausgestaltungen der Erfindung sind Gegenstand der Unteransprüche.

Eine erfindungsgemäße Motorsteuerungsvorrichtung für einen dreiphasigen bürstenlosen Gleichstrommotor umfasst einen Stromrichter, der für jede Phase des bürstenlosen Gleichstrommotors eine elektrische Halbbrücke mit zwei elektronischen Schaltern aufweist, und eine anwendungsspezifische integrierte Schaltung zur Ansteuerung der elektronischen Schalter des Stromrichters. Die anwendungsspezifische integrierte Schaltung ist in einem Normalbetrieb von einer programmierbaren Steuereinheit steuerbar, weist eine erste Schnittstelle zum Empfang eines eine Fehlfunktion signalisierenden Fehlersignals auf und ist dazu ausgebildet, den Stromrichter nach dem Empfang des Fehlersignals unabhängig von der programmierbaren Steuereinheit in einen definierten Betriebsendzustand zu versetzen.

Die erfindungsgemäße Motorsteuerungsvorrichtung ermöglicht es, einen bürstenlosen Gleichstrommotor bei einer sicherheitsrelevanten Fehlfunktion ohne Unterstützung einer programmierbaren Steuereinheit aktiv und kontrolliert direkt durch eine die elektronischen Schalter des Stromrichters ansteuernde anwendungsspezifische integrierte Schaltung in einen sicheren Betriebszustand zu versetzen, der durch einen Betriebsendzustand des Stromrichters definiert wird. Dadurch wird insbesondere verhindert, dass das Erreichen des sicheren Betriebszustands durch Fehler der programmierbaren Steuereinheit wie unerwünschte Bitflips verhindert wird.

Erfindungsgemäß weist die anwendungsspezifische integrierte Schaltung ein Bremsbitregister zum Setzen eines Bremsbit und ein Zählregister zum Speichern eines Zählwertes für den Schaltzustand des Stromrichters ändernde Kommutierungen auf und ist dazu ausgebildet, im Fall, dass bei dem Empfang des Fehlersignals das Bremsbit gesetzt ist, den Stromrichter sofort in den Betriebsendzustand zu versetzen, wenn der Zählwert größer als Null ist, und den Stromrichter vor dem Versetzen des Stromrichters in den Betriebsendzustand für eine definierte Bremszeitdauer in einen Bremsmodus zum Bremsen des bürstenlosen Gleichstrommotors zu versetzen, wenn der Zählwert Null ist.

Die vorgenannte Ausgestaltung der Erfindung ermöglicht ein kontrolliertes Bremsen des bürstenlosen Gleichstrommotors, bevor der Motor in den sicheren Betriebszustand versetzt wird, sofern das Bremsen durch das Setzen des Bremsbit vorgesehen ist und dem Bremsen keine durch den Zählwert des Zählregisters vorgesehenen Rotationen des Motors im Wege stehen.

Bei einer weiteren Ausgestaltung der Erfindung weist die anwendungsspezifische integrierte Schaltung außerdem eine zweite Schnittstelle zum Empfang wenigstens eines eine Rotorstellung eines Rotors des bürstenlosen Gleichstrommotors anzeigenden Sensorsignals auf und ist dazu ausgebildet, im Fall, dass bei dem Empfang des Fehlersignals das Bremsbit nicht gesetzt ist und der Zählwert größer als Null ist, vor dem Versetzen des Stromrichters in den Betriebsendzustand den Schaltzustand des Stromrichters durch wenigstens eine Kommutierung zu ändern und nach jeder Kommutierung zu prüfen, ob die Kommutierung eine Änderung der Rotorstellung des Rotors bewirkt hat, und den Zählwert im Fall einer erfolgten Änderung der Rotorstellung um Eins zu dekrementieren bis der Zählwert Null ist.

Die vorgenannte Ausgestaltung der Erfindung ermöglicht, gemäß dem Zählwert des Zählregisters vorgesehene Rotationen des Motors auszuführen, bevor der Motor in den sicheren Betriebszustand versetzt wird.

Bei einer weiteren Ausgestaltung der Erfindung weist die anwendungsspezifische integrierte Schaltung einen Zeitgeber auf und ist dazu ausgebildet, den Zeitgeber nach dem Empfang des Fehlersignals zu starten und den Stromrichter nach Ablauf einer definierten Zeitspanne seit dem Starten des Zeitgebers in den Betriebsendzustand zu versetzen.

Die vorgenannte Ausgestaltung der Erfindung ermöglicht, den Motor spätestens nach Ablauf der Zeitspanne in den sicheren Betriebszustand zu versetzen, insbesondere auch dann, wenn beispielsweise der Rotor des bürstenlosen Gleichstrommotors blockiert, daher nicht weitergedreht werden kann und somit eine Ausführung einer durch den Zählwert des Zählregisters vorgegebenen Anzahl von Rotordrehungen nicht realisiert werden kann.

Bei einer weiteren Ausgestaltung der Erfindung sind in dem Betriebsendzustand des Stromrichters alle elektronischen Schalter ausgeschaltet. Dadurch wird ein Freilauf des Rotors des bürstenlosen Gleichstrommotors und somit ein sicherer Betriebszustand des Motors ermöglicht.

Bei dem erfindungsgemäßen Verfahren zum Betreiben eines dreiphasigen bürstenlosen Gleichstrommotors mit einer erfindungsgemäßen Motorsteuerungsvorrichtung wird jede Phase des bürstenlosen Gleichstrommotors mit einer elektrischen Halbbrücke des Stromrichters verbunden, die elektronischen Schalter des Stromrichters werden mit der anwendungsspezifischen integrierten Schaltung angesteuert, die anwendungsspezifische integrierte Schaltung wird in einem Normalbetrieb von einer programmierbaren Steuereinheit gesteuert, und der Stromrichter wird von der anwendungsspezifischen integrierten Schaltung nach dem Empfang des Fehlersignals unabhängig von der programmierbaren Steuereinheit in den definierten Betriebsendzustand versetzt.

Erfindungsgemäß weist die anwendungsspezifische integrierte Schaltung ein Bremsbitregister zum Setzen eines Bremsbit und ein Zählregister zum Speichern eines Zählwertes für den Schaltzustand des Stromrichters ändernde Kommutierungen auf und im Fall, dass bei dem Empfang des Fehlersignals das Bremsbit gesetzt ist, wird von der anwendungsspezifischen integrierten Schaltung der Stromrichter sofort in den Betriebsendzustand versetzt, wenn der Zählwert größer als Null ist, und der Stromrichter wird vor dem Versetzen in den Betriebsendzustand für eine definierte Bremszeitdauer in einen Bremsmodus zum Bremsen des bürstenlosen Gleichstrommotors versetzt, wenn der Zählwert Null ist.

Bei einer weiteren Ausgestaltung des Verfahrens weist die anwendungsspezifische integrierte Schaltung eine zweite Schnittstelle zum Empfang wenigstens eines eine Rotorstellung eines Rotors des bürstenlosen Gleichstrommotors anzeigenden Sensorsignals auf und von der anwendungsspezifischen integrierten Schaltung wird im Fall, dass bei dem Empfang des Fehlersignals das Bremsbit nicht gesetzt ist und der Zählwert größer als Null ist, vor dem Versetzen des Stromrichters in den Betriebsendzustand der Schaltzustand des Stromrichters durch wenigstens eine Kommutierung geändert und nach jeder Kommutierung wird geprüft, ob die Kommutierung eine Änderung der Rotorstellung des Rotors bewirkt hat, und der Zählwert wird im Fall einer erfolgten Änderung der Rotorstellung um Eins dekrementiert bis der Zählwert Null ist.

Bei einer weiteren Ausgestaltung des Verfahrens weist die anwendungsspezifische integrierte Schaltung einen Zeitgeber auf und von der anwendungsspezifischen integrierten Schaltung wird der Zeitgeber nach dem Empfang des Fehlersignals gestartet und der Stromrichter wird nach Ablauf einer definierten Zeitspanne seit dem Starten des Zeitgebers in den Betriebsendzustand versetzt.

Bei einer weiteren Ausgestaltung des Verfahrens werden in dem Betriebsendzustand des Stromrichters alle elektronischen Schalter ausgeschaltet.

Die Vorteile des erfindungsgemäßen Verfahrens und seiner Ausgestaltungen entsprechen den oben bereits genannten Vorteilen einer erfindungsgemäßen Motorsteuerungsvorrichtung und deren oben genannten Ausgestaltungen und werden daher hier nicht noch einmal wiederholt.

Ausführungsbeispiele der Erfindung werden im Folgenden anhand von Zeichnungen näher erläutert.

Darin zeigen:
Figur 1 ein Blockdiagramm einer Motorsteuerungsvorrichtung für einen bürstenlosen Gleichstrommotor,
Figur 2 ein Ablaufdiagramm eines Verfahrens zum Betreiben eines bürstenlosen Gleichstrommotors in einem Fehlerfall.

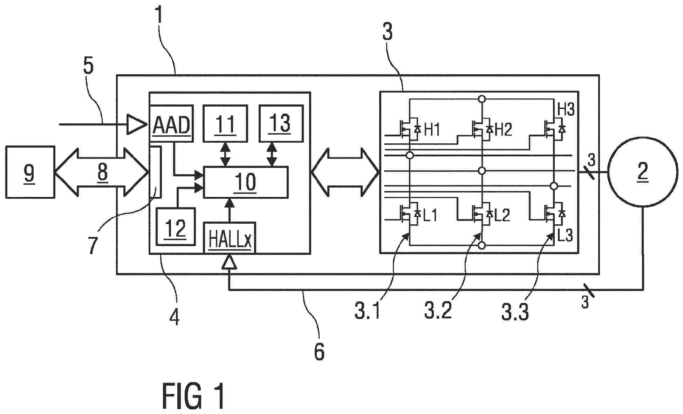

Figur 1 zeigt ein Blockdiagramm einer Motorsteuerungsvorrichtung 1 für einen dreiphasigen bürstenlosen Gleichstrommotor 2.

Die Motorsteuerungsvorrichtung 1 umfasst einen Stromrichter 3, der für jede Phase des bürstenlosen Gleichstrommotors 2 eine elektrische Halbbrücke 3.1, 3.2, 3.3 aufweist. Jede Halbbrücke 3.1, 3.2, 3.3 weist einen ersten elektronischen Schalter H1, H2, H3, einen zweiten elektronischen Schalter L1, L2, L3 und einen mit der jeweiligen Phase des bürstenlosen Gleichstrommotors 2 verbundenen Brückenzweig auf. Die ersten elektronischen Schalter H1, H2, H3 sind mit einem Pluspol einer Spannungsversorgung des Stromrichters 3 verbunden. Die zweiten elektronischen Schalter L1, L2, L3 sind mit einem Minuspol der Spannungsversorgung des Stromrichters 3 verbunden. Die elektronischen Schalter H1, H2, H3, L1, L2, L3 sind beispielsweise jeweils als ein MOSFET (Metall-Oxid-Halbleiter-Feldeffekttransistor) oder alternativ als ein IGBT (Bipolartransistor mit isolierter Gate-Elektrode) ausgebildet.

Ferner umfasst die Motorsteuerungsvorrichtung 1 eine anwendungsspezifische integrierte Schaltung 4 zur Ansteuerung der elektronischen Schalter H1, H2, H3, L1, L2, L3. Die anwendungsspezifische integrierte Schaltung 4 weist eine erste Schnittstelle AAD zum Empfang eines Fehlersignals 5 zur Signalisierung einer sicherheitsrelevanten Fehlfunktion, eine zweite Schnittstelle HALLx zum Empfang wenigstens eines eine Rotorstellung des Rotors des bürstenlosen Gleichstrommotors 2 anzeigenden Sensorsignals 6, beispielsweise wenigstens eines Hallsensorsignals, sowie wenigstens eine weitere Schnittstelle 7 zum Empfang von Motorsteuersignalen 8 auf. Die Motorsteuersignale 8 werden von einer programmierbaren Steuereinheit 9 erzeugt, von der die anwendungsspezifische integrierte Schaltung 4 in einem fehlerfreien Normalbetrieb gesteuert wird. Die Motorsteuersignale 8 sind beispielsweise Pulsweitenmodulationssignale zur durch Pulsweitenmodulation gesteuerten Kommutierung der elektronischen Schalter H1, H2, H3, L1, L2, L3.

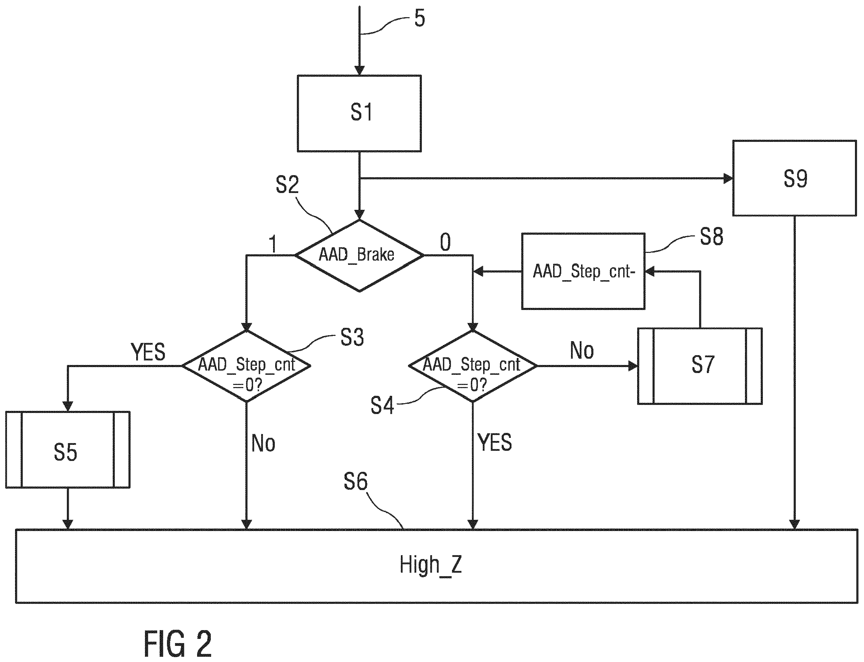

Die anwendungsspezifische integrierte Schaltung 4 ist dazu ausgebildet, den Stromrichter 3 nach dem Empfang des Fehlersignals 5 unabhängig von der programmierbaren Steuereinheit 9 in einen definierten Betriebsendzustand High_Z zu versetzen, in dem alle elektronischen Schalter H1, H2, H3, L1, L2, L3 abgeschaltet werden und der einen Freilaufzustand des bürstenlosen Gleichstrommotors 2 bewirkt. Dazu weist die anwendungsspezifische integrierte Schaltung 4 einen Error Handler 10 auf, der bei dem Empfang des Fehlersignals 5 aktiviert wird und dessen Funktionsweise nachfolgend anhand von Figur 2 näher beschrieben wird. Ferner weist die anwendungsspezifische integrierte Schaltung 4 ein Zählregister 11 zum Speichern eines Zählwertes AAD_Step_cnt für den Schaltzustand des Stromrichters 3 ändernde Kommutierungen, ein Bremsbitregister 12 zum Setzen eines Bremsbit AAD_Brake und einen Zeitgeber 13 auf.

Figur 2 zeigt ein Ablaufdiagramm eines Verfahrens mit Verfahrensschritten S1 bis S9 zum Betreiben des bürstenlosen Gleichstrommotors 2 nach dem Empfang des Fehlersignals 5.

In einem ersten Verfahrensschritt S1 wird der Error Handler 10 aktiviert und die Verarbeitung der von der programmierbaren Steuereinheit 9 erzeugten Motorsteuersignale 8 wird ausgesetzt. Die nachfolgenden Verfahrensschritte S2 bis S9 werden von dem Error Handler 10 unabhängig von der programmierbaren Steuereinheit 9 gesteuert. Nach dem ersten Verfahrensschritt S1 werden ein zweiter Verfahrensschritt S2 und ein neunter Verfahrensschritt S9 ausgeführt.

In dem zweiten Verfahrensschritt S2 wird das Bremsbitregister 12 gelesen. Wenn das Bremsbit AAD_Brake gesetzt ist, das heißt wenn AAD_Brake=1, wird das Verfahren mit einem dritten Verfahrensschritt S3 fortgesetzt. Andernfalls, das heißt wenn AAD_Brake=0, wird das Verfahren mit einem vierten Verfahrensschritt S4 fortgesetzt.

In dem dritten Verfahrensschritt S3 wird geprüft, ob der Zählwert AAD_Step_cnt Null ist. Wenn dies der Fall ist, wird das Verfahren mit einem fünften Verfahrensschritt S5 fortgesetzt. Andernfalls wird das Verfahren mit einem sechsten Verfahrensschritt S6 fortgesetzt.

In dem fünften Verfahrensschritt S5 wird der Stromrichter 3 für eine definierte Bremszeitdauer in einen Bremsmodus zum Bremsen des bürstenlosen Gleichstrommotors 2 versetzt. In dem Bremsmodus werden im Normalfall alle zweiten elektronischen Schalter L1, L2, L3 eingeschaltet und alle ersten elektronischen Schalter H1, H2, H3 abgeschaltet und in dem Ausnahmefall eines Kurzschlusses zwischen den ersten elektronischen Schaltern H1, H2, H3 und den Phasen des bürstenlosen Gleichstrommotors 2 alle ersten elektronischen Schalter H1, H2, H3 eingeschaltet und alle zweiten elektronischen Schalter L1, L2, L3 abgeschaltet. Nach dem fünften Verfahrensschritt S5 wird der sechste Verfahrensschritt S6 ausgeführt.

In dem sechsten Verfahrensschritt S6 wird der Stromrichter in den Betriebsendzustand High_Z versetzt.

In dem vierten Verfahrensschritt S4 wird ebenfalls geprüft, ob der Zählwert AAD_Step_cnt Null ist. Wenn dies der Fall ist, wird das Verfahren mit dem sechsten Verfahrensschritt S6 fortgesetzt. Andernfalls wird das Verfahren mit einem siebten Verfahrensschritt S7 fortgesetzt.

In dem siebten Verfahrensschritt S7 wird der Schaltzustand des Stromrichters 3 durch eine Kommutierung geändert und nach der Kommutierung wird geprüft, ob die Kommutierung eine Änderung der Rotorstellung des Rotors bewirkt hat. Im Fall einer erfolgten Änderung der Rotorstellung wird ein achter Verfahrensschritt S8 ausgeführt.

In dem achten Verfahrensschritt S8 wird der Zählwert AAD_Step_cnt um Eins dekrementiert. Nach dem achten Verfahrensschritt S8 wird wieder der siebte Verfahrensschritt S7 ausgeführt.

In dem neunten Verfahrensschritt S9 wird der Zeitgeber 12 gestartet. Nach Ablauf einer definierten Zeitspanne seit dem Starten des Zeitgebers 12 wird der sechste Verfahrensschritt S6 ausgeführt, das heißt, der Stromrichter 3 wird nach Ablauf der Zeitspanne in den Betriebsendzustand High_Z versetzt, sofern er sich dann noch nicht in dem Betriebsendzustand High_Z befindet. Auf diese Weise wird erreicht, dass der Stromrichter 3 spätestens nach Ablauf der Zeitspanne in den Betriebsendzustand High_Z versetzt wird, insbesondere auch dann, wenn der achte Verfahrensschritt S8 nicht ausgeführt wird, beispielsweise weil der Rotor des bürstenlosen Gleichstrommotors 2 blockiert und daher nicht weitergedreht werden kann.

Das oben beschriebene Ausführungsbeispiel der Erfindung kann in verschiedener Weise abgewandelt und ergänzt werden. Insbesondere kann es in für den Fachmann in offensichtlicher Weise auf die Steuerung von bürstenlosen Gleichstrommotoren 2 mit einer anderen Anzahl von Phasen abgewandelt werden.

### Bezugszeichenliste

- 1: Motorsteuerungsvorrichtung
- 2: bürstenloser Gleichstrommotor
- 3: Stromrichter
- 3.1, 3.2, 3.3: Halbbrücke
- 4: Steuereinheit
- 5: Fehlersignal
- 6: Sensorsignal
- 7, AAD, HALLx: Schnittstelle
- 8: Motorsteuersignal
- 9: Steuereinheit
- 10: Error Handler
- 11: Zählregister
- 12: Bremsbitregister
- 13: Zeitgeber
- AAD_Brake: Bremsbit
- AAD_Step_cnt: Zählwert
- High_Z: Betriebsendzustand
- H1, H2, H3: erster elektronischer Schalter
- L1, L2, L3: zweiter elektronischer Schalter
- S1 bis S9: Verfahrensschritt

## Patentansprüche

1. Motorsteuerungsvorrichtung (1) für einen dreiphasigen bürstenlosen Gleichstrommotor (2), die Motorsteuerungsvorrichtung (1) umfassend
- einen Stromrichter (3), der für jede Phase des bürstenlosen Gleichstrommotors (2) eine elektrische Halbbrücke (3.1, 3.2, 3.3) mit zwei elektronischen Schaltern (H1, H2, H3, L1, L2, L3) aufweist, und
- eine anwendungsspezifische integrierte Schaltung (4) zur Ansteuerung der elektronischen Schalter (H1, H2, H3, L1, L2, L3) des Stromrichters (3), wobei
- die anwendungsspezifische integrierte Schaltung (4) in einem Normalbetrieb von einer programmierbaren Steuereinheit (9) steuerbar ist, eine erste Schnittstelle (AAD) zum Empfang eines eine Fehlfunktion signalisierenden Fehlersignals (5) aufweist und dazu ausgebildet ist, den Stromrichter (3) nach dem Empfang des Fehlersignals (5) unabhängig von der programmierbaren Steuereinheit (9) in einen definierten Betriebsendzustand (High_Z) zu versetzen, **dadurch gekennzeichnet, dass** die anwendungsspezifische integrierte Schaltung (4) ein Bremsbitregister (12) zum Setzen eines Bremsbit (AAD_Brake) und ein Zählregister (11) zum Speichern eines Zählwertes (AAD_Step_cnt) für den Schaltzustand des Stromrichters (3) ändernde Kommutierungen aufweist und dazu ausgebildet ist, im Fall, dass bei dem Empfang des Fehlersignals (5) das Bremsbit (AAD_Brake) gesetzt ist, den Stromrichter (3) sofort in den Betriebsendzustand (High_Z) zu versetzen, wenn der Zählwert (AAD_Step_cnt) größer als Null ist, und den Stromrichter (3) vor dem Versetzen des Stromrichters (3) in den Betriebsendzustand (High_Z) für eine definierte Bremszeitdauer in einen Bremsmodus zum Bremsen des bürstenlosen Gleichstrommotors (2) zu versetzen, wenn der Zählwert (AAD_Step_cnt) Null ist.

2. Motorsteuerungsvorrichtung (1) nach Anspruch 1, wobei die anwendungsspezifische integrierte Schaltung (4) eine zweite Schnittstelle (HALLx) zum Empfang wenigstens eines eine Rotorstellung eines Rotors des bürstenlosen Gleichstrommotors (2) anzeigenden Sensorsignals (6) aufweist und dazu ausgebildet ist, im Fall, dass bei dem Empfang des Fehlersignals (5) das Bremsbit (AAD_Brake) nicht gesetzt ist und der Zählwert (AAD_Step_cnt) größer als Null ist, vor dem Versetzen des Stromrichters (3) in den Betriebsendzustand (High_Z) den Schaltzustand des Stromrichters (3) durch wenigstens eine Kommutierung zu ändern und nach jeder Kommutierung zu prüfen, ob die Kommutierung eine Änderung der Rotorstellung des Rotors bewirkt hat, und den Zählwert (AAD_Step_cnt) im Fall einer erfolgten Änderung der Rotorstellung um Eins zu dekrementieren bis der Zählwert (AAD_Step_cnt) Null ist.

3. Motorsteuerungsvorrichtung (1) nach einem der vorhergehenden Ansprüche, wobei die anwendungsspezifische integrierte Schaltung (4) einen Zeitgeber (13) aufweist und dazu ausgebildet ist, den Zeitgeber (13) nach dem Empfang des Fehlersignals (5) zu starten und den Stromrichter (3) nach Ablauf einer definierten Zeitspanne seit dem Starten des Zeitgebers (13) in den Betriebsendzustand (High_Z) zu versetzen.

4. Motorsteuerungsvorrichtung (1) nach einem der vorhergehenden Ansprüche, wobei in dem Betriebsendzustand (High_Z) des Stromrichters (3) alle elektronischen Schalter (H1, H2, H3, L1, L2, L3) ausgeschaltet sind.

5. Verfahren zum Betreiben eines dreiphasigen bürstenlosen Gleichstrommotors (2) mit einer gemäß einem der vorhergehenden Ansprüche ausgebildeten Motorsteuerungsvorrichtung (1), wobei
- jede Phase des bürstenlosen Gleichstrommotors (2) mit einer elektrischen Halbbrücke (3.1, 3.2, 3.3) des Stromrichters (3) verbunden wird,
- die elektronischen Schalter (H1, H2, H3, L1, L2, L3) des Stromrichters (3) mit der anwendungsspezifischen integrierten Schaltung (4) angesteuert werden,
- die anwendungsspezifische integrierte Schaltung (4) in einem Normalbetrieb von einer programmierbaren Steuereinheit (9) gesteuert wird, und
- der Stromrichter (3) von der anwendungsspezifischen integrierten Schaltung (4) nach dem Empfang des Fehlersignals (5) unabhängig von der programmierbaren Steuereinheit (9) in den definierten Betriebsendzustand (High_Z) versetzt wird, **dadurch gekennzeichnet, dass** die anwendungsspezifische integrierte Schaltung (4) ein Bremsbitregister (12) zum Setzen eines Bremsbit (AAD_Brake) und ein Zählregister (11) zum Speichern eines Zählwertes (AAD_Step_cnt) für den Schaltzustand des Stromrichters (3) ändernde Kommutierungen aufweist, und wobei im Fall, dass bei dem Empfang des Fehlersignals (5) das Bremsbit (AAD_Brake) gesetzt ist, von der anwendungsspezifischen integrierten Schaltung (4) der Stromrichter (3) sofort in den Betriebsendzustand (High_Z) versetzt wird, wenn der Zählwert (AAD_Step_cnt) größer als Null ist, und der Stromrichter (3) vor dem Versetzen des Stromrichters (3) in den Betriebsendzustand (High_Z) für eine definierte Bremszeitdauer in einen Bremsmodus zum Bremsen des bürstenlosen Gleichstrommotors (2) versetzt wird, wenn der Zählwert (AAD_Step_cnt) Null ist..

6. Verfahren nach Anspruch 5, wobei die anwendungsspezifische integrierte Schaltung (4) eine zweite Schnittstelle (HALLx) zum Empfang wenigstens eines eine Rotorstellung eines Rotors des bürstenlosen Gleichstrommotors (2) anzeigenden Sensorsignals (6) aufweist und wobei von der anwendungsspezifischen integrierten Schaltung (4) im Fall, dass bei dem Empfang des Fehlersignals (5) das Bremsbit (AAD_Brake) nicht gesetzt ist und der Zählwert (AAD_Step_cnt) größer als Null ist, vor dem Versetzen des Stromrichters (3) in den Betriebsendzustand (High_Z) der Schaltzustand des Stromrichters (3) durch wenigstens eine Kommutierung geändert wird und nach jeder Kommutierung geprüft wird, ob die Kommutierung eine Änderung der Rotorstellung des Rotors bewirkt hat, und der Zählwert (AAD_Step_cnt) im Fall einer erfolgten Änderung der Rotorstellung um Eins dekrementiert wird bis der Zählwert (AAD_Step_cnt) Null ist.

7. Verfahren nach einem der Ansprüche 5 oder 6, wobei die anwendungsspezifische integrierte Schaltung (4) einen Zeitgeber (13) aufweist, und wobei von der anwendungsspezifischen integrierten Schaltung (4) der Zeitgeber (13) nach dem Empfang des Fehlersignals (5) gestartet wird und der Stromrichter (3) nach Ablauf einer definierten Zeitspanne seit dem Starten des Zeitgebers (13) in den Betriebsendzustand (High_Z) versetzt wird.

8. Verfahren nach einem der Ansprüche 5 bis 7, wobei in dem Betriebsendzustand (High_Z) des Stromrichters (3) alle elektronischen Schalter (H1, H2, H3, L1, L2, L3) ausgeschaltet werden.

## Claims

1. Motor control apparatus (1) for a three-phase brushless DC motor (2), the motor control apparatus (1) comprising
- a power converter (3) which has an electrical half-bridge (3.1, 3.2, 3.3) having two electronic switches (H1, H2, H3, L1, L2, L3) for each phase of the brushless DC motor (2), and
- an application-specific integrated circuit (4) for actuating the electronic switches (H1, H2, H3, L1, L2, L3) of the power converter (3), wherein
- the application-specific integrated circuit (4) can be controlled by a programmable control unit (9) in a normal mode, has a first interface (AAD) for receiving an error signal (5) signalling a malfunction and is designed to change the power converter (3) to a defined final operating state (High_Z) independently of the programmable control unit (9) after receiving the error signal (5), **characterized in that** the application-specific integrated circuit (4) has a braking bit register (12) for setting a braking bit (AAD_Brake) and a counting register (11) for storing a count value (AAD_Step_cnt) for commutations which change the switching state of the power converter (3) and is designed, if the braking bit (AAD_Brake) is set when the error signal (5) is received, to immediately change the power converter (3) to the final operating state (High_Z) if the count value (AAD_Step_cnt) is greater than zero and, before changing the power converter (3) to the final operating state (High_Z), to change the power converter (3) to a braking mode for braking the brushless DC motor (2) for a defined braking period if the count value (AAD_Step_cnt) is zero.

2. Motor control apparatus (1) according to Claim 1, wherein the application-specific integrated circuit (4) has a second interface (HALLx) for receiving at least one sensor signal (6) indicating a rotor position of a rotor of the brushless DC motor (2) and is designed, if the braking bit (AAD_Brake) is not set and the count value (AAD_Step_cnt) is greater than zero when the error signal (5) is received, to change the switching state of the power converter (3) by means of at least one commutation before changing the power converter (3) to the final operating state (High_Z) and to check after each commutation whether the commutation has changed the rotor position of the rotor and to decrement the count value (AAD_Step_cnt) by one in the event of a change in the rotor position until the count value (AAD_Step_cnt) is zero.

3. Motor control apparatus (1) according to one of the preceding claims, wherein the application-specific integrated circuit (4) has a timer (13) and is designed to start the timer (13) after receiving the error signal (5) and to change the power converter (3) to the final operating state (High_Z) after the expiry of a defined period since starting the timer (13).

4. Motor control apparatus (1) according to one of the preceding claims, wherein all electronic switches (H1, H2, H3, L1, L2, L3) are switched off in the final operating state (High_Z) of the power converter (3).

5. Method for operating a three-phase brushless DC motor (2) using a motor control apparatus (1) designed according to one of the preceding claims, wherein
- each phase of the brushless DC motor (2) is connected to an electrical half-bridge (3.1, 3.2, 3.3) of the power converter (3),
- the electronic switches (H1, H2, H3, L1, L2, L3) of the power converter (3) are actuated using the application-specific integrated circuit (4),
- the application-specific integrated circuit (4) is controlled by a programmable control unit (9) in a normal mode, and
- the power converter (3) is changed to the defined final operating state (High_Z) by the application-specific integrated circuit (4) independently of the programmable control unit (9) after receiving the error signal (5),
**characterized in that** the application-specific integrated circuit (4) has a braking bit register (12) for setting a braking bit (AAD_Brake) and a counting register (11) for storing a count value (AAD_Step_cnt) for commutations which change the switching state of the power converter (3), and wherein, if the braking bit (AAD_Brake) is set when the error signal (5) is received, the power converter (3) is immediately changed to the final operating state (High_Z) by the application-specific integrated circuit (4) if the count value (AAD_Step_cnt) is greater than zero and, before changing the power converter (3) to the final operating state (High_Z), the power converter (3) is changed to a braking mode for braking the brushless DC motor (2) for a defined braking period if the count value (AAD_Step_cnt) is zero.

6. Method according to Claim 5, wherein the application-specific integrated circuit (4) has a second interface (HALLx) for receiving at least one sensor signal (6) indicating a rotor position of a rotor of the brushless DC motor (2), and wherein, if the braking bit (AAD_Brake) is not set and the count value (AAD_Step_cnt) is greater than zero when the error signal (5) is received, the switching state of the power converter (3) is changed by the application-specific integrated circuit (4) by means of at least one commutation before changing the power converter (3) to the final operating state (High_Z) and it is checked after each commutation whether the commutation has changed the rotor position of the rotor, and the count value (AAD_Step_cnt) is decremented by one in the event of a change in the rotor position until the count value (AAD_Step_cnt) is zero.

7. Method according to either of Claims 5 and 6, wherein the application-specific integrated circuit (4) has a timer (13), and wherein the timer (13) is started by the application-specific integrated circuit (4) after receiving the error signal (5), and the power converter (3) is changed to the final operating state (High_Z) after the expiry of a defined period since starting the timer (13).

8. Method according to one of Claims 5 to 7, wherein all electronic switches (H1, H2, H3, L1, L2, L3) are switched off in the final operating state (High_Z) of the power converter (3).

## Revendications

1. Dispositif de commande de moteur (1) pour un moteur triphasé à courant continu sans balais (2), le dispositif de commande de moteur (1) comprenant
- un convertisseur de courant (3) qui présente pour chaque phase du moteur à courant continu sans balais (2) un demi-pont électrique (3.1, 3.2, 3.3) pourvu de deux commutateurs électroniques (H1, H2, H3, L1, L2, L3), et
- un circuit intégré spécifique à une application (4) pour piloter les commutateurs électroniques (H1, H2, H3, L1, L2, L3) du convertisseur de courant (3), dans lequel
- le circuit intégré spécifique à une application (4), dans un fonctionnement normal, peut être commandé par une unité de commande programmable (9), présente une première interface (AAD) pour recevoir un signal d'erreur (5) signalant un dysfonctionnement, et est réalisé, après la réception du signal d'erreur (5), pour mettre le convertisseur de courant (3) dans un état final de fonctionnement défini (High_Z) indépendamment de l'unité de commande programmable (9),
**caractérisé en ce que** le circuit intégré spécifique à une application (4) présente un registre de bits de freinage (12) pour activer un bit de freinage (AAD_Brake) et un registre de comptage (11) pour stocker une valeur de comptage (AAD_Step_cnt) pour des commutations modifiant l'état de commutation du convertisseur de courant (3), et dans le cas où à la réception du signal d'erreur (5) le bit de freinage (AAD_Brake) est activé, est réalisé pour mettre le convertisseur de courant (3) immédiatement à l'état final de fonctionnement (High_Z) lorsque la valeur de comptage (AAD_Step_cnt) est supérieure à zéro, et avant de mettre le convertisseur de courant (3) à l'état final de fonctionnement (High_Z), pour mettre le convertisseur de courant (3) dans un mode de freinage pendant une durée de freinage définie pour freiner le moteur à courant continu sans balais (2) lorsque la valeur de comptage (AAD_Step_cnt) est égale à zéro.

2. Dispositif de commande de moteur (1) selon la revendication 1, dans lequel le circuit intégré spécifique à une application (4) présente une deuxième interface (HALLx) pour recevoir au moins un signal de capteur (6) indiquant une position de rotor d'un rotor du moteur à courant continu sans balais (2), et dans le cas où à la réception du signal d'erreur (5) le bit de freinage (AAD_Brake) n'est pas activé et la valeur de comptage (AAD_Step_cnt) est supérieure à zéro, avant de mettre le convertisseur de courant (3) à l'état final de fonctionnement (High_Z), est réalisé pour modifier l'état de commutation du convertisseur de courant (3) par au moins une commutation, et pour vérifier après chaque commutation si la commutation a provoqué une modification de la position de rotor du rotor, et pour décrémenter de un la valeur de comptage (AAD_Step_cnt) en cas de modification effective de la position de rotor jusqu'à ce que la valeur de comptage (AAD_Step_cnt) soit égale à zéro.

3. Dispositif de commande de moteur (1) selon l'une quelconque des revendications précédentes, dans lequel le circuit intégré spécifique à une application (4) présente un temporisateur (13), et est réalisé pour démarrer le temporisateur (13) après la réception du signal d'erreur (5), et pour mettre le convertisseur de courant (3) à l'état final de fonctionnement (High_Z) après expiration d'une durée définie depuis le démarrage du temporisateur (13).

4. Dispositif de commande de moteur (1) selon l'une quelconque des revendications précédentes, dans lequel tous les commutateurs électroniques (H1, H2, H3, L1, L2, L3) sont mis hors tension à l'état final de fonctionnement (High_Z) du convertisseur de courant (3).

5. Procédé permettant de faire fonctionner un moteur triphasé à courant continu sans balais (2) comprenant un dispositif de commande de moteur (1) réalisé selon l'une quelconque des revendications précédentes, dans lequel
- chaque phase du moteur à courant continu sans balais (2) est reliée à un demi-pont électrique (3.1, 3.2, 3.3) du convertisseur de courant (3),
- les commutateurs électroniques (H1, H2, H3, L1, L2, L3) du convertisseur de courant (3) sont pilotés par le circuit intégré spécifique à une application (4),
- dans un fonctionnement normal, le circuit intégré spécifique à une application (4) est commandé par une unité de commande programmable (9), et
- après la réception du signal d'erreur (5), le convertisseur de courant (3) est mis par le circuit intégré spécifique à une application (4) à l'état final de fonctionnement (High_Z) défini, indépendamment de l'unité de commande programmable (9),
**caractérisé en ce que** le circuit intégré spécifique à une application (4) présente un registre de bits de freinage (12) pour activer un bit de freinage (AAD_Brake) et un registre de comptage (11) pour stocker une valeur de comptage (AAD_Step_cnt) pour des commutations modifiant l'état de commutation du convertisseur de courant (3), et dans lequel, dans le cas où à la réception du signal d'erreur (5) le bit de freinage (AAD_Brake) est activé, le convertisseur de courant (3) est immédiatement mis à l'état final de fonctionnement (High_Z) par le circuit intégré spécifique à une application (4) lorsque la valeur de comptage (AAD_Step_cnt) est supérieure à zéro, et avant que le convertisseur de courant (3) ne soit mis à l'état final de fonctionnement (High_Z), le convertisseur de courant (3) est mis dans un mode de freinage pendant une durée de freinage définie pour freiner le moteur à courant continu sans balais (2) lorsque la valeur de comptage (AAD_Step_cnt) est égale à zéro.

6. Procédé selon la revendication 5, dans lequel le circuit intégré spécifique à une application (4) présente une deuxième interface (HALLx) pour recevoir au moins un signal de capteur (6) indiquant une position de rotor d'un rotor du moteur à courant continu sans balais (2), et dans lequel, pour le cas où à la réception du signal d'erreur (5) le bit de freinage (AAD_Brake) n'est pas activé et la valeur de comptage (AAD_Step_cnt) est supérieure à zéro, avant que le convertisseur de courant (3) ne soit mis à l'état final de fonctionnement (High_Z), le circuit intégré spécifique à une application (4) modifie l'état de commutation du convertisseur de courant (3) par au moins une commutation, et après chaque commutation vérifie si la commutation a provoqué une modification de la position de rotor du rotor, et décrémente de un la valeur de comptage (AAD_Step_cnt) en cas de modification effective de la position de rotor jusqu'à ce que la valeur de comptage (AAD_Step_cnt) soit égale à zéro.

7. Procédé selon l'une quelconque des revendications 5 ou 6, dans lequel le circuit intégré spécifique à une application (4) présente un temporisateur (13), et est dans lequel, après la réception du signal d'erreur (5), le circuit intégré spécifique à une application (4) démarre le temporisateur (13) et met le convertisseur de courant (3) à l'état final de fonctionnement (High_Z) après expiration d'une durée définie depuis le démarrage du temporisateur (13).

8. Procédé selon l'une quelconque des revendications 5 à 7, dans lequel tous les commutateurs électroniques (H1, H2, H3, L1, L2, L3) sont mis hors tension à l'état final de fonctionnement (High_Z) du convertisseur de courant (3).
